Europäisches Patentamt

European Patent Office

Office européen des brevets

(11) Publication number: **0 317 263**
**A2**

## (12) EUROPEAN PATENT APPLICATION

(21) Application number: 88310772.4

(51) Int. Cl.⁴: **C08F 8/04 , G02B 1/04**

(22) Date of filing: 15.11.88

(30) Priority: 18.11.87 JP 291624/87

(43) Date of publication of application:
24.05.89 Bulletin 89/21

(84) Designated Contracting States:
DE FR GB IT NL

(71) Applicant: JAPAN SYNTHETIC RUBBER CO.,
LTD.
11-24, Tsukiji-2-chome Chuo-ku
Tokyo 104(JP)

(72) Inventor: Iio, Akira
Nihon Gosei Gomu Shataku
1, Morigayamacho Yokkaichi-shi(JP)
Inventor: Yoshinari, Masashi
Nihon Gosei Gomu Shataku
1, Morigayamacho Yokkaichi-shi(JP)
Inventor: Komiya, Zen
Nihon Gosei Gomu Shataku 1,
Marigayamacho
Yokkaichi-shi(JP)
Inventor: Goto, Kohei
Nihon Gosei Gomu Shataku 1,
Morigayamacho
Yokkaichi-shi(JP)

(74) Representative: Clifford, Frederick Alan et al
MARKS & CLERK 57/60 Lincoln's Inn Fields
London WC2A 3LS(GB)

(54) Optical material.

(57) An optical material composed essentially of a hydrogenation product of a polymer of an alkenyl aromatic hydrocarbon compound or a copolymer of an alkenyl aromatic hydrocarbon compound with a copolymerizable monomer, wherein at least 30% of the aromatic hydrocarbon ring has been hydrogenated. This material has a low index of birefringence, high transparency and excellent moldability, and accordingly is very useful as a material for optical recording disk and optical lenes.

This invention relates to an optical material having high transparency, low dispersivity, low hygroscopicity and excellent heat resistance.

In recent years, research has been made on application of transparent resins not only as a molding material for automobile parts, lighting appliances, electric parts, sundry goods, etc. in which the resins are required to have transparency, but also as an optical material in which the optical properties of the resins are regarded as important. Such an optical material must not only possess high transparency but also satisfy high requirement which conventional transparent resins have been unable to satisfy.

Known optical materials for use in, for example, optical lenses and optical disk substrates are a polycarbonate resin, a polymethyl methacrylate resin, a polycyclohexyl methacrylate resin, a copolymer resin of an alkyl methacrylate with methyl methacrylate, styrene or other monomer, a polymer resin containing an alkyl methacrylate in which the alkyl group is bulky, and others.

The above optical materials, however, satisfy not all of low birefringence, low dispersivity, low hygroscopicity, excellent heat resistance and high mechanical strength required for optical lenses and, in particular, optical disk substrates.

For example, when the polystyrene resin or polycarbonate resin among the above optical materials is used as a material for optical disk substrates, there is a tendency that an increased error appears when the resulting optical disk is subjected to regeneration of information by laser beam, because said resin has a large index of birefringence. When the polymethyl methacrylate resin, which has a large hygroscopicity, is used for the same purpose, warp is caused on the surface of the resulting optical disk accompanying a change in dimension and shape due to moisture absorption. Therefore, there is a great fear that error may be increased during the regeneration of information, and simultaneously the recorded film may be deteriorated owing to moisture absorption. The polycyclohexyl methacrylate resin, although its hygroscopicity is not objectionable, has a low glass transition temperature and accordingly poor heat resistance. A copolymer of cyclohexyl methacrylate with methyl methacrylate or styrene has somewhat increased heat resistance; however a copolymer of cyclohexyl methacrylate with methyl methacrylate has high hygroscopicity and a copolymer of cyclohexyl methacrylate with styrene has an increased double refraction and hence is inferior in optical properties. A poly(4-methylpentene-1) resin has a low glass transition temperature and is inferior in heat resistance, though it has a low hygroscopicity.

Also, when the above optical materials are used in optical lenses, they do not satisfy completely the required properties with respect to heat resistance, hygroscopicity, dispersivity, etc.

As described above, the present status is that substantially no adequate resins are available as optical material having sufficient optical properties, low hygroscopicity, excellent heat resistance and high mechanical strength.

Therefore, the present inventors have made research in order to develop an optical material free from the above problems, particularly an excellent optical material for use in optical recording disk substrates and optical lenses. As a result, it has been found that a hydrogenation product of a polymer of an alkenyl aromatic hydrocarbon compound or a copolymer of an alkenyl aromatic hydrocarbon compound with a copolymerizable monomer has a low index of birefringence, high transparency and excellent moldability and accordingly is very useful as an optical material for use in optical recording disk substrates and as general optical materials including optical lenses, and further that when the aromatic hydrocarbon rings of the (co)-polymer is hydrogenated, the glass transition temperature is greatly increased as compared with that of the unhydrogenated (co)polymer, and accordingly, the hydrogenated (co)polymer serves also as an optical material having better heat resistance than the conventional optical materials.

According to this invention, there is provided an optical material consisting essentially of a hydrogenation product of a polymer of an alkenyl aromatic hydrocarbon compound or a copolymer of an alkenyl aromatic hydrocarbon compound with a copolymerizable monomer, wherein at least 30% of the aromatic hydrocarbon rings has been hydrogenated.

The alkenyl aromatic hydrocarbon compound used in this invention includes substituted or unsubstituted styrene, $\alpha$-methylstyrene, $\alpha$-vinylnaphthalene, $\beta$-vinylnaphthalene, $\alpha$-isopropenylnaphthalene and $\beta$-isopropenylnaphthalene. Of these, styrene and $\alpha$-methylstyrene are particularly preferred. These alkenyl hydrocarbon compounds can be used alone or in admixture of two or more. The preferable admixture is, for example, a combination of styrene and $\alpha$-methylstyrene. Ring-substituted alkenyl aromatic hydrocarbon compounds included in the above alkenyl aromatic hydrocarbon compound include mono- or di-(cyclo)alkyl-ring-substituted styrenes such as o-methylstyrene, m-methylstyrene, p-methylstyrene, p-cyclohexylstyrene, p-t-butylstyrene, o,m-, o,p- and m,p-dimethylstyrenes and the like; o-, m- and p-alkoxystyrenes such as o-, m- and p-methoxystyrenes and the like; o-, m- and p-hydroxystyrenes; o-, m- and p-carbomethoxystyrenes; o-, m- and p-acetoxystyrenes; and functional group-ring-substituted styrenes such as o-, m- and p-cyanostyrenes and the like. These compounds may have at least two same or different substituents.

In this invention, it is possible to use as an optical material a hydrogenation product of a polymer composed only of an alkenyl aromatic hydrocarbon compound. However, when it is intended to prepare an optical material for the purpose of using it in fields in which the adhesiveness of the surface of an optical device is required, it is preferable to use as an optical material a hydrogenation product of a copolymer obtained by copolymerizing an alkenyl aromatic hydrocarbon with a copolymerizable monomer. The monomer copolymerizable with an alkenyl aromatic hydrocarbon compound, used in this invention, includes unsaturated fatty acids, unsaturated fatty acid esters, unsaturated fatty acid salts, unsaturated fatty acid amides, cyanoalkenyl compounds, and unsaturated dibasic acids and their derivatives. The unsaturated fatty acid esters include alkyl acrylates such as methyl acrylate, ethyl acrylate, propyl acrylate, butyl acrylate, 2-ethylhexyl acrylate and the like; cycloalkyl acrylates such as cyclohexyl acrylate, methylcyclohexyl acrylate, t-butylcyclohexyl acrylate, bornyl acrylate, isobornyl acrylate, adamantyl acrylate, 2-[5,2,1,0$^{2,6}$]tricyclodecyl acrylate and the like; aromatic esters of acrylic acid such as phenyl acrylate, benzyl acrylate, naphthyl acrylate and the like; substituted aromatic esters of acrylic acid such as fluorobenzyl acrylate, chlorophenyl acrylate, bromobenzyl acrylate and the like; halogenated alkyl acrylates such as fluoromethyl acrylate, fluoroethyl acrylate, chloroethyl acrylate, bromoethyl acrylate and the like; hydroxyalkyl acrylates; glycidyl acrylate; aminoalkyl acrylates; cyanoalkyl acrylates; alkyl methacrylates such as methyl methacrylate, ethyl methacrylate, propyl methacrylate, butyl methacrylate, 2-ethylhexyl methacrylate and the like; cycloalkyl methacrylates such as cyclohexyl methacrylate, methylcyclohexyl methacrylate, t-butylcyclohexyl methacrylate, bornyl methacrylate, isobornyl methacrylate, adamantyl methacrylate, 2-[5,2,1,0$^{2,6}$]tricyclodecyl methacrylate and the like; aromatic esters of methacrylic acid such as phenyl methacrylate, benzyl methacrylate, naphthyl methacrylate and the like; substituted aromatic esters of methacrylic acid such as fluorobenzyl methacrylate, chlorophenyl methacrylate, bromobenzyl methacrylate and the like; halogenated alkyl methacrylates such as fluoromethyl methacrylate, fluoroethyl methacrylate, chloroethyl methacrylate, bromoethyl methacrylate and the like; hydroxyalkyl methacrylates; glycidyl methacrylate; aminoalkyl methacrylates; and cyanoalkyl methacrylates. The cyanoalkenyl compounds include acrylonitrile and methacrylonitrile. The unsaturated dibasic acids or their derivatives include N-substituted maleimides such as N-methylmaleimide, N-ethylmaleimide, N-propylmaleimide, N-butylmaleimide, N-cyclohexylmaleimide, N-phenylmaleimide, N-methylphenylmaleimide, N-methoxyphenylmaleimide, N-carboxyphenylmaleimide and the like; maleic acid; and fumaric acid. The unsaturated fatty acids, unsaturated fatty acid salts and unsaturated fatty acid amides include acrylic acid amides and methacrylic acid amides such as acrylamide, methacrylamide, N-dimethylacrylamide, N-diethylacrylamide, N-dimethylmethacrylamide, N-diethylmethacrylamide and the like; metal acrylates or methacrylates such as calcium acrylate, calcium methacrylate, barium acrylate, barium methacrylate, lead acrylate, lead methacrylate, tin acrylate, tin methacrylate, zinc acrylate, zinc methacrylate and the like; acrylic acid; and methacrylic acid. These can be used alone or in combination of two or more for copolymerization with an alkenyl aromatic hydrocarbon compound.

Of the above copolymerizable monomers, preferred are acrylic acid esters, methacrylic acid esters and N-substituted maleimides. Particularly preferred are methyl methacrylate, methyl acrylate, N-phenylmaleimide and N-cyclohexylmaleimide.

The weight ratio of the alkenyl aromatic hydrocarbon compound to the copolymerizable monomer is preferably 5-100/95-0, especially preferably 10-100/90-0, more preferably 20-100/80-0.

The (co)polymer of the alkenyl aromatic hydrocarbon compound can be produced according to any desired method such as radical polymerization method, ionic polymerization method, coordination polymerization method or the like. The radical polymerization method, for example, is conducted ordinarily at 0-200°C, preferably 20-150°C, in the presence of a radical polymerization initiator according to bulk polymerization, solution polymerization, suspension polymerization, emulsion polymerization or the like. Bulk polymerization or suspension polymerization is preferred particularly when the contamination of the produced resin with impurities, etc. must be avoided. The radical polymerization initiator includes organic peroxides such as benzoyl peroxide, lauroyl peroxide, di-t-butyl peroxyhexahydroterephthalate, t-butyl peroxy-2-ethylhexanoate, 1,1-di-t-butylperoxy-3,3,5-trimethylcyclohexanone and the like; azo compounds such as azoisobutyronitrile, azoisobis-4-methoxy-2,4-dimethylvaleronitrile, azobiscyclohexanone-1-carbonitrile, azodibenzoyl and the like; water-soluble catalysts such as potassium persulfate, ammonium persulfate and the like; and redox catalysts which are combinations of a peroxide or a persulfate and a reducing agent. Any of the radical polymerization initiators which can be used in conventional radical polymerization may be used. The anionic polymerization method is conducted usually at a temperature of -80 to 200°C, preferably 20-150°C, in the presence of an anionic polymerization initiator according to bulk polymerization, solution polymerization or slurry polymerization. Solution polymerization using an inert solvent such as hexane, cyclohexane or the like is preferred particularly when the contamination of the produced resin with impurities must be avoided and the heat generated by the reaction must be removed. As the anionic polymerization initiator, organic lithium compounds can ordinarily be used. Preferably, n-butyllithium and sec-butyllithium may be used. As well known, an ether or a tertiary amine may be added in this case.

The produced polymer can be recovered according to a known method such as steam distillation of solvent, direct solvent removal, coagulation by alcohol, or the like. When an inert solvent is used in the hydrogenation of the polymer, the polymerization solution can be used as it is in the hydrogenation without recovering the polymer from the polymerization solution.

With respect to the (co)polymer used in this invention, its molecular weight is not critical. In order for the (co)polymer to have excellent heat resistance and high mechanical strength, the polystyrene-reduced weight-average molecular weight of the polymer is required to be in the range of preferably 30,000-1,000,000, more preferably 50,000-800,000, most preferably 60,000-600,000. The (co)polymer having a molecular weight of the above range can exhibit good moldability when used as a molding material.

The hydrogenation of the polymer of the alkenyl aromatic hydrocarbon compound or the copolymer of the alkenyl aromatic hydrocarbon compound with the copolymerizable monomer is conducted in a homogeneous or heterogeneous phase in the presence of a known hydrogenation catalyst. The solvent used in the hydrogenation reaction may be any solvent as long as it is inert to the hydrogenation reaction. As such a solvent, there are preferably used ethers (e.g. tetrahydrofuran, dioxane and the like), alicyclic hydrocarbons (e.g. cyclohexane, methylcyclohexane and the like), alcohols, esters, etc. The concentration of the (co)polymer in the liquid phase during the hydrogenation reaction is 1-50%, preferably 3-40%, more preferably 5-30%. When the (co)polymer concentration is too high, the hydrogenation rate is low. When the (co)polymer concentration is too low, it is necessary to use an excessively large hydrogenation vessel.

The hydrogenation reaction is conducted at a temperature of $10\text{-}250°C$, preferably $50\text{-}200°C$, more preferably $80\text{-}180°C$ at a pressure of $1\text{-}300 \text{ kg/cm}^2$, preferably $10\text{-}250 \text{ kg/cm}^2$, more preferably $20\text{-}200 \text{ kg/cm}^2$. At a low reaction temperature, the reaction rate is low and, at too high a reaction temperature, the decomposition of polymer takes place. At a low hydrogen pressure, the reaction rate is low and, at a high hydrogen pressure, a reactor capable of withstanding high pressure is required.

As the hydrogenation catalyst, metal is nickel, cobalt, iron, titanium, rhodium, palladium, platinum, ruthenium and rhenium and their compounds are used alone or in combination of two or more. Of these, metallic rhodium, palladium, platinum, ruthenium and rhenium and their compounds are preferred because they enable hydrogenation under mild reaction conditions. A heterogeneous catalyst may be used, which is the metal as such or the metal compound as such or may be supported on an appropriate carrier. As the carrier, conventional carriers are used such as active carbon, silica, alumina, silicaalumina, diatomaceous earth, barium carbonate, calcium carbonate, titania, magnesia, zirconia, silicon carbide and the like. In this case, the amount of the metal supported on the carrier is ordinarily 0.01-50% by weight, preferably 0.05-20% by weight. The hydrogenation reaction in a heterogeneous system can be conducted according to a conventionally used method such as fixed bed method, suspended bed method, circulation method or the like. The heterogeneous catalyst may be combinations of a compound of nickel, cobalt, titanium or iron with an organometal compound such as an organoaluminum or organolithium compound, and organometal complexes of rhodium, palladium, platinum, ruthenium, rhenium or the like. The compounds of nickel, cobalt, titanium and iron used in the homogeneous catalyst include, for example, acetylacetonates, naphthenates, cyclopentadienyl compounds and cyclopentadienyl dichloro compounds of said metals. The organoaluminum compound includes, for example, alkylaluminums such as triethylaluminum, triisobutylaluminum and the like; halogenated alkylaluminums such as diethylaluminum chloride, ethylaluminum dichloride and the like; and alkylaluminum hydrides such as diisobutylaluminum hydride and the like. Examples of the organometal complexes are $\gamma$-dichloro-$\pi$-benzene complexes, dichloro-tris-(triphenylphosphine) complexes and hydrido-chloro-tris(triphenylphosphine) complexes of said metals.

In this invention, the hydrogenation degree of the (co)polymer is critical. That is, in the optical material of this invention, at least 30% of the aromatic hydrocarbon ring of the (co)polymer must be hydrogenated. When the hydrogenation degree of the aromatic hydrocarbon ring of the (co)polymer is less than 30%, the optical material has poor optical properties such as dispersivity, birefringence, etc. and is unsuitable as such. The hydrogenation degree is preferably at least 50%, more preferably at least 80%. In general, a higher hydrogenation degree is preferred; however, when the optical material of this invention is obtained, for example, by hydrogenating a polymer composed only of an alkenyl aromatic hydrocarbon, the hydrogenation degree of the polymer may be made less than 100% to leave some aromatic groups unhydrogenated in view of (a) the surface adhesion, coloration, etc. of the optical material and (b) the adhesion to the recording layer of optical disk when used as an optical disk substrate.

EP 0 317 263 A2

The hydrogenation of the (co)polymer generally results in an elevation of glass transition temperature of the (co)polymer. Ordinarily, the glass transition temperature of the hydrogenated (co)polymer is preferably 60-250°C, particularly preferably 80-200°C. When the hydrogenated (co)polymer has a low glass transition temperature, it is inferior in heat resistance and accordingly is unsuitable as an optical material. When the hydrogenated (co)polymer has too high a glass transition temperature, it causes degradation of polymer during molding and accordingly is unsuitable as an optical material.

The optical material of this invention, in order to impart thereto improved oxidation resistance, heat stability and moldability, may ccntain antioxidants of phenol type, phosphite type, thioether type, etc.; aliphatic alcohols; aliphatic esters; phthalic esters; triglycerides; fluorine-containing surfactants; and release agents such as metal salts of higher fatty acids and the like. The optical material may further contain additives such as lubricant, antistatic agent, ultraviolet absorber, heavy metal deactivator and the like.

The optical material of this invention can be formed into optical products using various known molding methods. That is, there can be used injection molding, compression molding, extrusion molding, etc.

The applications of the optical material of this invention are not particularly restricted. The optical material can be used in wide applications, preferably in optical lenses (e.g. lens for common cameras, lens for video cameras, lens for telescopes, lens for laser beam), optical video disks, audio disks, document file disks, memory disks, etc.

The optical device using the optical material of this invention can be hard-coated at the surface with an inorganic compound, an organosilicon compound (e.g. silane coupling agent), an acrylic type monomer, a vinyl type monomer, a melamine resin, an epoxy resin, a fluororesin, a silicone resin or the like according to a method such as heat curing, ultraviolet curing, vacuum deposition, sputtering, ion plating or the like to improve the heat resistance, optical properties, chemical resistance, wear resistance, moisture permeability, etc.

The optical material of this invention, being essentially composed of a hydrogenation product of a polymer of an alkenyl aromatic hydrocarbon compound or a copolymer of an alkenyl aromatic hydrocarbon compound and a monomer copolymerizable therewith, has excellent optical properties, i.e. high transparency and low dispersivity, excellent heat resistance, low hygroscopicity, high mechanical strength and good moldability, as compared with the heretofore known unhydrogenated polymers.

Examples of this invention are described below. However, this invention is not restricted to these Examples.

Molecular weight was measured according to GPC and determined as a polystyrene-reduced weight-average molecular weight.

Hydrogenation degree was measured by dissolving a sample in carbon dissulfide and obtaining a peak in the vicinity of 900 cm$^{-1}$ in infrared spectrophotometry.

Bending strength was measured according to ASTM D 790.

Pencil hardness was measured according to JIS K 5401.

Total light transmittance was measured according to JIS K 6717.

Refractive index and Abbe's number were measured using an Abbe's refractometer.

Birefringence was measured using an ellipsometer.

In the measurement of saturated water absorption, a sample was dipped in water and, when the water absorption of the sample reached an equilibrium, the weight of the water-absorbed sample was measured. The sample was heated at 200°C in a dry nitrogen stream and the amount of the water released was determined according to the Karl Fischer method. The saturated water absorption of the sample is calculated from the following equation:

Saturated water absorption (%) =
100 x (amount of released water)/(weight of water-absorbed sample - amount of released water)

Example 1

100 parts by weight of styrene, 100 parts by weight of toluene and 0.01 part by weight of azoisobutyronitrile were placed in a 300-ml separable flask equipped with a reflux condenser and a stirrer. With stirring, the resulting mixture was heated to 80°C and subjected to reaction at that temperature for 8 hours. The resulting polymer solution was added to a large amount of methanol containing 2 parts by weight of 2,2'-methylenebis(4-methyl-6-tert-butylphenol) to precipitate a polymer. The polymer was collected by filtration and dried to obtain 98 parts by weight of a polystyrene. The polystyrene had an average molecular weight of 80,000.

5

100 parts by weight of this polystyrene was dissolved in 1,000 parts by weight of tetrahydrofuran. Thereto was added 20 parts by weight of a rhodium (5 wt.%)/carbon catalyst (product of Nippon Engelhard Limited). The mixture was subjected to hydroxenation in an autoclave at a hydrogen pressure of 100 kg/cm$^2$ at 140°C for 4 hours.

The hydrogenated polymer-containing reaction mixture was diluted with cyclohexane and then filtered. The filtrate was added to a large amount of methanol containing 1 part by weight of 2,2'-methylenebis(4-methyl-6-tert-butylphenol) to precipitate a hydrogenated polymer. The hydrogenated polymer was collected by filtration and dried to obtain 101 parts by weight of a hydrogenated polystyrene. The hydrogenated polymer had an average molecular weight of 80,000 which was the same as before hydrogenation. The hydrogenation degree of the aromatic hydrocarbon ring of the hydrogenated polymer was 100%. The hydrogenated polymer was subjected to injection molding to measure the properties. The results of the measurements are shown in Table 1.

Examples 2 to 6

The same procedure as in Example 1 was repeated, except that the degree of polymerization of styrene was changed by varying the polymerization temperature and the amount of solvent used and the hydrogenation degree was changed by varying the hydrogen pressure and the hydrogenation time during hydrogenation to prepare hydrogenated polymers. They were measured for physical properties in the same manner as in Example 1. The results obtained are shown in Table 1.

Comparative Example 1

The polymer before hydrogenation obtained in Example 1 was measured for physical properties in the same manner as in Example 1. The results obtained are shown in Table 1.

Example 7

An autoclave equipped with a stirrer and a jacket was washed and dried. Thereto were fed 500 parts by weight of tetrahydrofuran, 80 parts by weight of styrene and 20 parts by weight of α-methylstyrene in a nitrogen atmosphere. Then, the temperature inside the autoclave was lowered to -50°C.

A hexane solution containing 0.07 part by weight of sec-butyllithium was added to the above mixture, and the resulting mixture was subjected to polymerization for 60 minutes. The temperature of polymerization system was maintained at -50°C during polymerization. After the completion of the polymerization, a small amount of methanol was added to the reaction mixture to terminate the polymerization reaction, whereby a copolymer solution was obtained.

This copolymer solution was subjected to hydrogenation in the same manner as in Example 1, except that the catalyst was changed to a ruthenium (5 wt.%)/carbon catalyst (product of Nippon Engelhard Limited), to obtain a hydrogenated copolymer having a hydrogenation degree of 97%. The hydrogenated copolymer was measured for physical properties in the same manner as in Example 1. The results obtained are shown in Table 2.

Example 8

The same polymerization procedure as in Example 1 was repeated, except that 80 parts by weight of styrene and 20 parts by weight of methyl methacrylate were substituted for the 100 parts by weight of styrene, to obtain a copolymer. The copolymer was subjected to the same hydrogenation procedure as in Example 1, except that the catalyst was replaced by a ruthenium (5 wt.%)/carbon catalyst (product of Nippon Engelhard Limited), to obtain a hydrogenated copolymer having a hydrogenation degree of 98%. The hydrogenated copolymer was measured for physical properties in the same manner as in Example 1. The results obtained are shown in Table 2.

Example 9

The same polymerization procedure as in Example 1 was repeated, except that 60 parts by weight of styrene and 40 parts by weight of methyl methacrylate were substituted for the 100 parts by weight of styrene, to obtain a copolymer. The copolymer was hydrogenated by repeating the same procedure as in Example 1, except that the catalyst was replaced by a palladium (5 wt.%)/carbon catalyst (product of Nippon Engelhard Limited) and the hydrogen pressure was increased to 140 kg/cm$^2$, to obtain a hydrogenated copolymer having a hydrogenation degree of 98%. The hydrogenated copolymer was measured for physical properties in the same manner as in Example 1. The results obtained are shown in Table 2.

Comparative Example 2

The copolymer before hydrogenation obtained in Example 8 was measured for physical properties. The results obtained are shown in Table 2.

Example 10

The same procedure as in Example 1 was repeated, except that 85 parts by weight of styrene and 15 parts by weight of maleic anhydride were substituted for the 100 parts by weight of styrene to a hydrogenated copolymer having a hydrogenation degree of 97%. The hydrogenated copolymer was measured for physical properties in the same manner as in Example 1. The results obtained are shown in Table 2.

Example 11

The same procedure as in Example 1 was repeated except that 80 parts by weight of styrene, 10 parts by weight of methyl methacrylate and 10 parts by weight of maleic anhydride were substituted for the 100 parts by weight of styrene, to obtain a hydrogenated copolymer having a hydrogenation degree of 90%. The hydrogenated copolymer was measured for physical properties in the same manner as in Example 1. The results obtained are shown in Table 2.

Example 12

The same procedure as in Example 1 was repeated, except that 80 parts by weight of styrene, 10 parts by weight of methyl methacrylate and 10 parts by weight of N-phenylmaleimide were substituted for the 100 parts by weight of styrene, to obtain a hydrogenated copolymer having a hydrogenation degree of 40%. The hydrogenated copolymer was measured for physical properties in the same manner as in Example 1. The results obtained are shown in Table 2.

Example 13

The same procedure as in Example 1 was repeated, except that 70 parts by weight of styrene, 10 parts by weight of methyl methacrylate and 20 parts by weight of N-cyclohexylmaleimide were substituted for the 100 parts by weight of styrene, to obtain a hydrogenated copolymer having a hydrogenation degree of 98%. The hydrogenated copolymer was measured for physical properties in the same manner as in Example 1. The results obtained are shown in Table 2.

Table 1

| | Mw | Hydrogenation degree (%) | Tg (°C) | Water absorption (%) | Total light transmittance (%) | Refractive index ($n_D^{20}$) |
|---|---|---|---|---|---|---|
| Example 1 | 80,000 | 100 | 137 | 0.1 | 91 | 1.48 |
| Example 2 | 90,000 | 98 | 137 | 0.1 | 91 | 1.48 |
| Example 3 | 110,000 | 60 | 123 | 0.1 | 91 | 1.52 |
| Example 4 | 60,000 | 99 | 138 | 0.1 | 91 | 1.48 |
| Example 5 | 120,000 | 80 | 131 | 0.1 | 90 | 1.51 |
| Example 6 | 100,000 | 40 | 115 | 0.1 | 91 | 1.54 |
| Comparative Example 1 | 80,000 | 0 | 99 | 0.1 | 90 | 1.59 |

(Cont'd.)

Table 1 (Cont'd.)

| Bi-refringence (nm) | Abbe's number (Vd) | Bending modulus (x10$^4$ kg/cm$^2$) | Bending strength (kg/cm$^2$) | Pencil hardness |
|---|---|---|---|---|
| <20 | 56 | 3.0 | 480 | H |
| <20 | 55 | 3.0 | 500 | H |
| <40 | 47 | 3.3 | 510 | H |
| <20 | 56 | 2.9 | 450 | H |
| <20 | 52 | 3.3 | 530 | H |
| <40 | 41 | 3.3 | 530 | H |
| >200 | 31 | 3.2 | 540 | H |

Table 2

| | Mw | Hydrogenation degree (%) | Tg (°C) | Water absorption (%) | Total light transmittance (%) | Refractive index ($n_D^{20}$) |
|---|---|---|---|---|---|---|
| Example 7 | 90,000 | 96 | 153 | 0.1 | 90 | 1.48 |
| Example 8 | 80,000 | 98 | 134 | 0.2 | 91 | 1.49 |
| Example 9 | 85,000 | 98 | 128 | 0.4 | 92 | 1.49 |
| Example 10 | 90,000 | 97 | 170 | 0.3 | 90 | 1.49 |
| Example 11 | 95,000 | 90 | 150 | 0.2 | 90 | 1.49 |
| Example 12 | 150,000 | 40 | 115 | 0.1 | 91 | 1.49 |
| Example 13 | 100,000 | 98 | 144 | 0.3 | 90 | 1.49 |
| Comparative Example 2 | 80,000 | 0 | 143 | 0.3 | 88 | 1.57 |

(Cont'd.)

Table 2 (Cont'd.)

| | 1 | 2 | 3 | 4 | 5 | 6 | 7 | 8 |
|---|---|---|---|---|---|---|---|---|
| Pencil hardness | H | H | H | H | H | 2H | 2H | H |
| Bending strength (kg/cm$^2$) | 680 | 680 | 700 | 700 | 730 | 580 | 570 | 700 |
| Bending modulus ($\times 10^4$ kg/cm$^2$) | 2.8 | 3.0 | 3.0 | 3.0 | 3.0 | 3.2 | 3.3 | 3.2 |
| Abbe's number (Vd) | 59 | 57 | 57 | 57 | 57 | 57 | 57 | 34 |
| Bi-refringence (nm) | <20 | <20 | <20 | <20 | <20 | <20 | <20 | >100 |

## Claims

1. An optical material composed essentially of a hydrogenation product of a polymer of an alkenyl aromatic hydrocarbon compound or a copolymer of an alkenyl aromatic hydrocarbon compound with a copolymerizable monomer, wherein at least 30% of the aromatic hydrocarbon ring has been hydrogenated.

2. An optical material according to Claim 1, wherein at least 50% of the aromatic hydrocarbon ring has been hydrogenated.

3. An optical material according to Claim 1, wherein at least 80% of the aromatic hydrocarbon ring has been hydrogenated.

4. An optical material according to Claim 1, wherein the copolymerizable monomer is an unsaturated fatty acid ester, a cyanoalkenyl compound, an unsaturated dibasic acid or its derivative, an unsaturated fatty acid, an unsaturated fatty acid salt or an unsaturated fatty acid amide.

5. An optical material according to Claim 4, wherein the unsaturated fatty acid ester includes alkyl acrylates, cycloalkyl acrylates, aromatic acrylates, substituted aromatic acrylates, halogenated alkyl acrylates, hydroxyalkyl acrylates, glycidyl acrylate, aminoalkyl acrylates, cyanoalkyl acrylates, alkyl methacrylates, cycloalkyl methacrylates, aromatic methacrylates, substituted aromatic methacrylates, halogenated alkyl methacrylates, hydroxyalkyl methacrylates, glycidyl methacrylate, aminoalkyl methacrylates and cyanoalkyl methacrylates; the cyanoalkenyl compound includes acrylonitrile and methacrylonitrile; the

11

unsaturated dibasic acid or its derivative includes N-substituted maleimides, maleic acid and fumaric acid; the unsaturated fatty acid includes acrylic acid and methacrylic acid; the unsaturated fatty acid amide includes acrylic acid amides and methacrylic acid amides; and the unsaturated fatty acid salt includes metal acrylates and metal methacrylates.

6. An optical material according to Claim 1, wherein the copolymerizable monomer is at least one monomer selected from the group consisting of acrylic acid esters, methacrylic acid esters and N-substituted maleimides.

7. An optical material according to Claim 1, wherein the weight ratio of the alkenyl aromatic hydrocarbon compound to the copolymerizable monomer is 5-100/95-0.

8. An optical material according to Claim 1, wherein the (co)polymer has a polystyrene-reduced weight-average molecular weight of 30,000-1,000,000.

9. An optical material according to Claim 1, wherein the hydrogenated (co)polymer has a glass transition temperature of 60-250°C.

10. An optical material composed essentially of a hydrogenation product of a copolymer of an alkenyl aromatic hydrocarbon compound with a copolymerizable monomer, wherein at least 30% of the aromatic hydrocarbon ring has been hydrogenated.

11. An optical material according to Claim 1, wherein at least 50% of the aromatic hydrocarbon ring has been hydrogenated.

12. An optical material according to Claim 10, wherein at least 80% of the aromatic hydrocarbon ring has been hydrogenated.

13. An optical material according to Claim 10, wherein the copolymerizable monomer is an unsaturated fatty acid ester, a cyanoalkenyl compound, an unsaturated dibasic acid or its derivative, an unsaturated fatty acid, an unsaturated fatty acid salt or an unsaturated fatty acid amide.

14. An optical material according to Claim 4, wherein the unsaturated fatty acid ester includes alkyl acrylates, cycloalkyl acrylates, aromatic acrylates, substituted aromatic acrylates, halogenated alkyl acrylates, hydroxyalkyl acrylates, glycidyl acrylate, aminoalkyl acrylates, cyanoalkyl acrylates, alkyl methacrylates, cycloalkyl methacrylates, aromatic methacrylates, substituted aromatic methacrylates, halogenated alkyl methacrylates, hydroxyalkyl methacrylates, glycidyl methacrylate, aminoalkyl methacrylates and cyanoalkyl methacrylates; the cyanoalkenyl compound includes acrylonitrile and methacrylonitrile; the unsaturated dibasic acid or its derivative includes N-substituted maleimides, maleic acid and fumaric acid; the unsaturated fatty acid includes acrylic acid and methacrylic acid; the unsaturated fatty acid amide includes acrylic acid amides and methacrylic acid amides; and the unsaturated fatty acid salt includes metal acrylates and metal methacrylates.

15. An optical material according to Claim 10, wherein the copolymerizable monomer is at least one monomer selected from the group consisting of acrylic acid esters, methacrylic acid esters and N-substituted maleimides.

16. An optical material according to Claim 10, wherein the weight ratio of the alkenyl aromatic hydrocarbon compound to the copolymerizable monomer is 5-100/95-0.

17. An optical material according to Claim 10, wherein the copolymer has a polystyrene-reduced weight-average molecular weight of 30,000-1,000,000.

18. An optical material according to Claim 10, wherein the hydrogenated copolymer has a glass transition temperature of 60-250°C.